# EUROPEAN PATENT APPLICATION

(11) **EP 1 029 444 A1**
(43) Date of publication of application: **23.08.2000**
(21) Application number: 99938398.7
(22) Date of filing: 30.07.1999
(51) Int. Cl.: A01G 9/10

(54) **SEED TRAY FOR AUTOMATED GREENHOUSES AND AUTOMATIC TRANSPLANTATION**

(30) Priority: 06.08.1998 ES 9802110 U
(71) Applicant: Semirec, S.L., 30594 Murcia (ES)
(72) Inventor: BERNAL CAVA, Fulgencio, 30594 Murcia (ES); LIJON GARCIA, Fco. Gabriel, 30594 Murcia (ES)
(74) Representative: Perez Bonal, Bernardo
(86) International application number: ES9900245
(87) International publication number: WO0007429

(57) **Abstract**

The invention relates to a tray which includes lateral longitudinal strips (2) provided with a line of rectangular perforations (2.1) of which the major sides are oriented in the same direction as the sheet for driving the tray, and are also provided with orthogonal side stop platelets (2.2). Small reinforcement protuberances (2.3) for reinforcing the edge of the perforation (2.1) and other intermediary anti-tear perforations (2.4) are provided.

## Description

### OBJECT OF THE INVENTION

The invention here disclosed relates to a seed-bed tray for automated greenhouses and automatic transplant from among those modular trays with automatic seed filling for their germination and later automatic transplant in soil.

The invention is characterised by the tray incorporating side bands provided with transportation orifices, receptacles with grooved and weakened bottoms, flanges which act as stops in stacking of planted seed-beds and others which act as indicators and stops in the end of the motion of the tray during automatic transplant of the plant.

### BACKGROUND OF THE INVENTION

Concentration of small vegetable soil and seeds in an aligned arrangement in rows and columns, for filling and automatic planting of seeds is widely known and has been used in large greenhouses for at least three decades.

Despite the great advance provided by this multiple tray construction, greenhouse technology has not yet improved handling of said planted trays, nor in transplanting the germinated plant.

The applicant is unaware of any trays of the characteristics of the one here disclosed in order to be used and integrated in fully automated installations.

### DESCRIPTION OF THE INVENTION

The invention object of the present memory relates to a seed-bed tray for automated greenhouses and automatic transplant, from among those modular trays which are covered with vegetable soil and automatically filled with seeds by conventional machinery for this purpose, to aid in their germination and for later joint transportation in the same tray in order to be later transplanted to other automatic transplant recipients in the soil.

This invention, with its top base as a rectangular sheet and provided with suitable aligned conical projections which define the containers, is characterised by the tray incorporating lateral bands placed along the greater sides.

These bands are respectively provided with aligned rectangular orifices with their greater sides placed along the sense of the sheet and meant for transport of the tray, additionally provided with lateral stop plates orthogonal and next to the greater lateral edge of the tray's bottom surface.

Between orifices and along their edge are provided small tray-reinforcement projections near these orifices.

In turn, the germination receptacles are provided with a conventional grooved base in order to drain residual water and to aid in their emptying, which characterises their construction as a weakened sheet base, i.e. with a thickness lesser than the sides of the seed-bearing receptacle.

the tray further incorporates projections in its lower face in the form of lugs which act as supports when stacking the trays.

The receptacles are separated from each other by a short axial band for further projections to be located which act as indicators and stops in the end of the tray motion in automatic transplant of the seed-bed.

Said longitudinal axial projections consist of scalene-triangular cross-section wedges, with their middle side resting on the inner face of the tray and separated from each other, as well as placed opposing each other as specular images by their lesser vertical sides.

This arrangement of the projections allows to hold the tray by a stop, such as a conventional positioning and braking rod which can act regardless of the position in which the tray is inserted.

### DESCRIPTION OF THE DRAWINGS

These and further characteristics of the invention will be apparent in view of the accompanying drawings which, for purposes of illustration only and in no way meant as a limitation of the invention the following is shown:

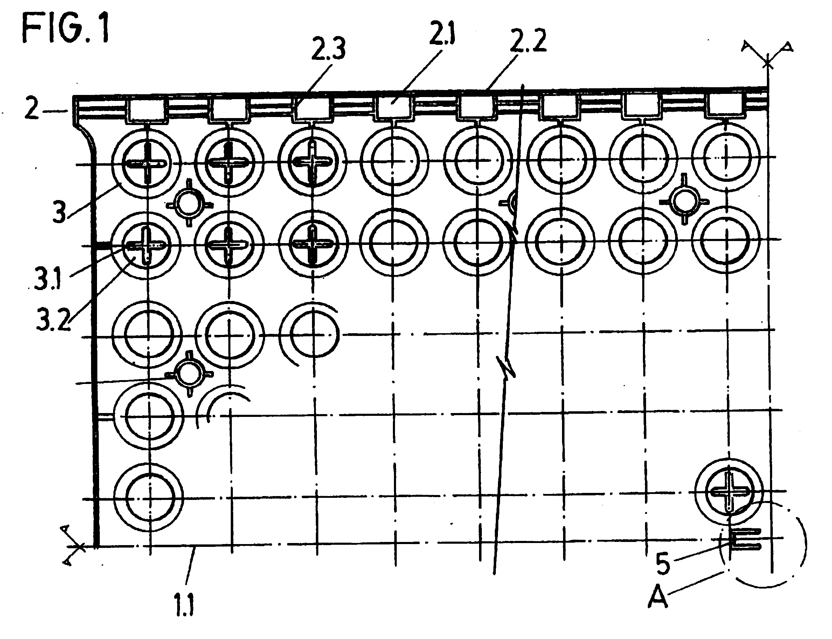

Figure 1 shows a one quarter sectional and plan view of the tray of the invention, showing the weakened recipient sheet.

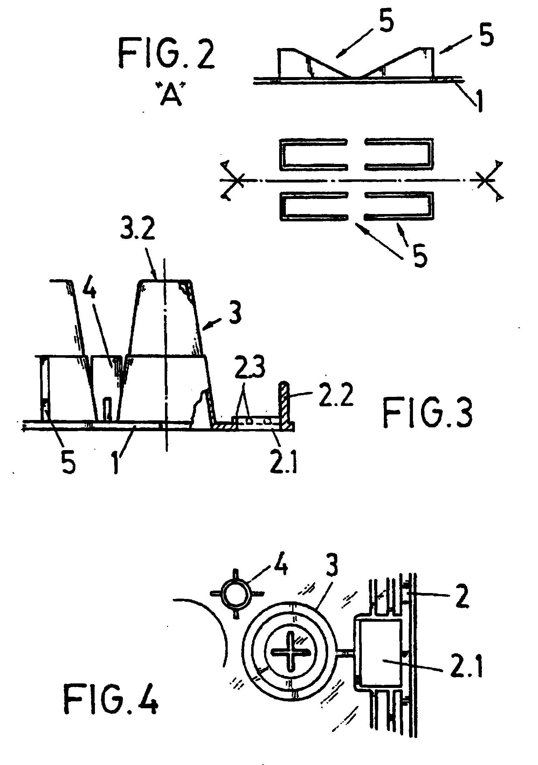

Figure 2 shows an opposite partial elevation and plan view showing the support lugs and one of the positioning wedges.
Figure 3 is an enlargement of the elevation view showing some of the recipients and one of the wedges.
Figure 4 is a further enlargement of the edge of the tray with a receptacle between a lug and a perforation.

### PREFERRED EMBODIMENT OF THE INVENTION

In view of the above, the present invention relates to a seed-bed tray for automated greenhouses and automatic transplant from among those modular trays with automatic seed filling for their germination as well as for transport and transplant, essentially characterised in that the tray (1) incorporates longitudinal side bands (2) provided with aligned rectangular orifices (2.1) with greater sides in the same sense as the sheet, for carrying tray (1) provided with orthogonal lateral stop plates (2.2) and small projections (2.3) for reinforcing the edge of perforation (2.1) and further intermediate anti-rip perforations (2.4).

Receptacles (3) incorporate, in addition to the conventional water drainage groove (3.1), a weakened base sheet (3.2) in order to provide a simple opening during the automatic pressing of the tray (1) for transplanting the germinated seed.

Projections (4) on its lower face in the form of conical lugs arranged regularly in rows and columns act as stops and supports during stacking of the planted trays.

An axial band (1.1) free of receptacles (3) incorporates projections (5) for signalling and stop of the tray's motion, holding it in place.

The description is not continued in the understanding that any expert in the field would be capable of understanding the scope of the invention and the advantages derived thereof, as well as to reproduce it.

It is understood that the essence of the invention is not changed by variations in shape, size and arrangement of the component elements within the same characterisation.

The terms used in the description and its sense are to be understood in a non-limiting manner.

## Claims

1. Seed-bed tray for automated greenhouses and automatic transplant from among those modular trays with automatic seed filling and germination as well as for transport and automatic transplant in soil, essentially characterised in that the tray (1) incorporates longitudinal side bands (2) provided with aligned rectangular orifices (2.1) with greater sides in the same sense as the sheet for carrying tray (1), provided with orthogonal lateral stop plates (2.2) and small projections (2.3) for reinforcing the edge of perforation (2.1) and further intermediate anti-rip perforations (2.4).

2. Seed-bed tray, from among those provided with a conventional water drainage groove (3.1), as in claim 1, characterised in that receptacles (3) incorporate a weakened base sheet (3.2) in order to provide a simple opening during the automatic pressing of the tray (1) for transplanting the germinated seed.

3. Seed-bed tray, as in claim 1, characterised in that its bottom base is provided with projection (4) acting as stops and for support in stacking of planted trays.

4. Seed-bed tray, as in claims 1 and 3, characterised in that an axial band (1.1) is free of receptacles (3), incorporating projections for indication and stops (5) of the path of tray (1).
